(19) Europäisches Patentamt
European Patent Office
Office européen des brevets

(11) EP 4 604 242 A1

(12) EUROPEAN PATENT APPLICATION
published in accordance with Art. 153(4) EPC

(43) Date of publication:
**20.08.2025 Bulletin 2025/34**

(21) Application number: **23929422.6**

(22) Date of filing: **31.03.2023**

(51) International Patent Classification (IPC):
***H01M 10/0525*** *(2010.01)* ***H01M 4/36*** *(2006.01)*
***H01M 10/0567*** *(2010.01)*

(52) Cooperative Patent Classification (CPC):
**H01M 4/36; H01M 10/0525; H01M 10/0567;**
Y02E 60/10

(86) International application number:
**PCT/CN2023/085554**

(87) International publication number:
**WO 2024/197837 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology (Hong Kong) Limited**
**Hong Kong (HK)**

(72) Inventors:
- **XU, Ningbo**
  **Ningde, Fujian 352100 (CN)**
- **ZOU, Hailin**
  **Ningde, Fujian 352100 (CN)**
- **CHEN, Peipei**
  **Ningde, Fujian 352100 (CN)**

(74) Representative: **Jacob, Reuben Ellis**
**Maucher Jenkins**
**Seventh Floor Offices**
**Artillery House**
**11-19 Artillery Row**
**London SW1P 1RT (GB)**

# (54) SECONDARY BATTERY AND ELECTRICAL APPARATUS

(57) The present application provides a secondary battery. The secondary battery comprises a negative electrode sheet and an electrolyte; the negative electrode sheet comprises a silicon-carbon composite material having a three-dimensional network cross-linked pore structure; the electrolyte contains a first component, the first component containing at least one of compounds represented by formula I and formula II. The cooperation of the three-dimensional network cross-linked pore structure of the silicon-carbon composite material and the first component of the electrolyte inhibits the volume effect of active materials during charge-discharge processes, and improves the initial coulombic efficiency and the cycle stability of batteries.

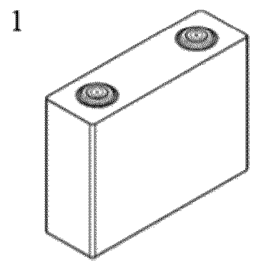


FIG. 1

EP 4 604 242 A1

## Description

### TECHNICAL FIELD

The present application relates to the technical field of secondary batteries, and in particular, to a secondary battery and an electric device.

### BACKGROUND

In recent years, secondary batteries have been widely used in energy storage power systems such as hydropower, thermal power, wind power, and solar power stations, as well as in various fields such as electric tools, electric bicycles, electric motorcycles, electric vehicles, military equipment, and aerospace.

With the increasing market demand for battery energy, the adoption of high capacity electrode materials has become a common recognition in the art. However, many electrode materials with high theoretical capacity are difficult to achieve their capacity level. How to improve the capacity performance of a battery through mutual cooperation of components of the battery is a technical problem to be solved urgently in the field.

### SUMMARY

The present application is made in view of the above problems, and its purpose is to provide a secondary battery. Through matching of the electrolyte with the negative electrode material, the initial coulombic efficiency and the cycle capacity retention rate of the battery are improved, such that the capacity performance and the cycle performance of the battery are optimized.

A first aspect of the present application provides a secondary battery including a negative electrode plate and an electrolyte. The negative electrode plate includes a silicon-carbon composite material having a three-dimensional network cross-linked pore structure; the electrolyte includes a first component, the first component including at least one of compounds represented by formula I and formula II,

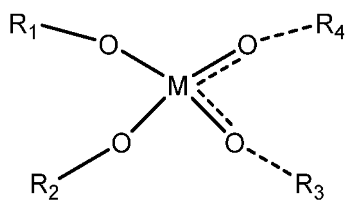 formula I 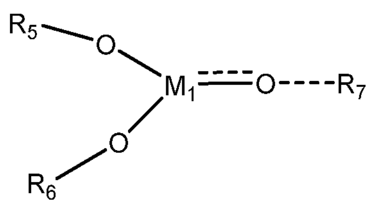 formula II

where

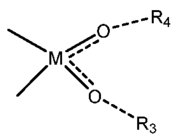

represents that M and O may optionally be single or double bonded, and when M and O are double bonded, there is no bond between O and $R_4$ or $R_3$;

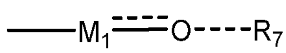

represents that $M_1$ and O may optionally be single or double bonded, and when $M_1$ and O are double bonded, there is no bond between O and $R_7$; $R_1$, $R_2$, $R_3$, $R_4$, $R_5$, $R_6$, and $R_7$ are each independently selected from fluorine, fluorine-substituted or unsubstituted $C_1$-$C_{10}$ alkyl, aryl, carbonyl, carboxyl, an ester group, cyano, a silane group, or an ether group, and M and $M_1$ each independently include P, S, Si, or B.

The silicon-carbon composite material having a three-dimensional network cross-linked pore structure has a stable porous skeleton and good mechanical strength, and can effectively reduce the volume change of silicon before and after charging and discharging while loading a high silicon content, thereby improving the cycle performance of the battery. Meanwhile, the M element of the first component in the electrolyte can be combined with active groups, such as hydroxyl, carboxyl, and amino, on the silicon-carbon composite material, such that the effect of stabilizing active groups is achieved, the consumption of active lithium by the active groups is reduced, the initial coulombic efficiency of the battery is improved,

and the capacity performance level of the battery is improved. The stabilization of the active groups on the silicon-carbon composite material can further reduce the capacity attenuation of the battery during a cycling process and improve the cycle performance of the battery. Moreover, the first component additive can generate inorganic substances containing M element, such as phosphate and sulfate, in a solid electrolyte film (SEI) on the surface of the silicon-carbon composite material, such that the strength of the SEI film can be further improved, and the cracking of the SEI film along with the expansion of a silicon negative electrode can be reduced, thereby improving the cycle performance of the battery.

In any embodiment, a specific surface area of the silicon-carbon composite material is SSA$m^2/g$,

a mass proportion of the first component based on the total mass of the electrolyte is EL g/g, and

EL:SSA is 0.0001-0.03, and optionally 0.0004-0.01.

The larger the specific surface area of the silicon-carbon composite material is, the higher the content of the surface functional groups is. When the ratio EL:SSA of the mass proportion of the first component in the electrolyte to the specific surface area SSA of the silicon-carbon composite material satisfies the range described above, the first component can effectively perform the function of "passivating" the active groups on the silicon-carbon composite material, thereby improving the capacity performance and the cycle performance of the battery.

In any embodiment,

a mass proportion of the first component based on the total mass of the electrolyte is EL g/g. In the outer peripheral region of the silicon-carbon composite material, a mass percentage content of the silicon element in the silicon-carbon composite material relative to the total mass of the silicon-carbon composite material is B1. The outer peripheral region of the silicon-carbon composite material is a region which extends from the outer surface of the silicon-carbon composite material to the interior of the silicon-carbon composite material by a distance within r/2, where r represents a short diameter of the silicon-carbon composite material, and

EL:B1 is 0.001-0.1, and optionally 0.005-0.06.

Compared with the internal silicon element, the silicon element in the outer peripheral region of the silicon-carbon composite material is easier to accumulate residual active groups during a preparation process, and is less likely to be restrained by a carbon skeleton, leading to more significant volume expansion. When the ratio of the mass proportion of the first component in the electrolyte to the mass percentage content B1 of the silicon element in the silicon-carbon composite material relative to the total mass of the silicon-carbon composite material satisfies the range described above, it is conducive to "passivating" the active groups on the silicon element through the first component, thereby further improving the initial coulombic efficiency and the cycle capacity retention rate of the battery.

In any embodiment, a total pore volume of pores with a pore size greater than 100 nm in the silicon-carbon composite material is V1 $g/cm^3$, a mass proportion of the first component based on the total mass of the electrolyte is EL g/g, and EL:V1 is 1-30, and preferably 2-15.

When the ratio EL:V1 of the mass proportion of the first component in the electrolyte to the total pore volume V1 of pores with a pore size greater than 100 nm in the silicon-carbon composite material satisfies the range described above, the first component can easily enter the pore structure of the silicon-carbon composite material to form mutual cooperation with the pore structure, so as to further improve the capacity performance level and the cycle capacity retention rate of the battery.

In any embodiment, in the outer peripheral region of the silicon-carbon composite material, a mass percentage content A1 of the carbon element of the silicon-carbon composite material relative to the total mass of the silicon-carbon composite material and the mass percentage content B1 of the silicon element of the silicon-carbon composite material relative to the total mass of the silicon-carbon composite material satisfy $0.8 \le B1/A1 \le 2.5$, optionally $1 \le B1/A1 \le 1.5$.

In the outer peripheral region of the silicon-carbon composite material, when the mass percentage content A1 of the carbon element of the silicon-carbon composite material relative to the total mass of the silicon-carbon composite material and the mass percentage content B1 of the silicon element of the silicon-carbon composite material relative to the total mass of the silicon-carbon composite material satisfy the range described above, the mass of silicon in the pore structure of the silicon-carbon composite material is relatively high, which can significantly increase the capacity of the negative electrode active material, moreover, the voltage for the intercalation of metal ions is relatively low, which is conducive to the intercalation of the metal ions, such that the cycle performance of the secondary battery is improved. Meanwhile, the three-dimensional network cross-linked pore structure can inhibit the volume expansion of silicon during a cycling process and improve the structural stability of the negative electrode active material, thereby improving the cycle performance of the battery.

In any embodiment, the mass percentage content A of the carbon element of the silicon-carbon composite

material relative to the total mass of the silicon-carbon composite material has a decreasing trend in a direction from the geometric center of the silicon-carbon composite material to the outer surface of the silicon-carbon composite material, while the mass percentage content B of the silicon element of the silicon-carbon composite material relative to the total mass of the silicon-carbon composite material has an increasing trend in a direction from the geometric center of the silicon-carbon composite material to the outer surface of the silicon-carbon composite material.

Due to the example that the silicon-carbon composite material may be irregularly shaped, the geometric center of the silicon-carbon composite material may be equivalent to the geometric center of a rectangular parallelepiped tangential thereto. In the direction from the geometric center of the silicon-carbon composite material to the outer surface of the silicon-carbon composite material, the mass percentage content A of the carbon element is gradually reduced, while the mass percentage content B of the silicon element is gradually increased. As a result, the content of silicon in the pore structure of the silicon-carbon composite material is gradually increased, and thus the content of silicon is relatively high, which can significantly increase the capacity of the negative electrode active material. Moreover, the content of the silicon element is continuously increased from the outer surface to the center, such that the active functional groups on the surface of silicon-based particles are continuously reduced, and the inhibitory effect of carbon-based particles on the expansion of the silicon element becomes increasingly significant, thereby further improving the capacity performance and the cycle performance of the battery.

In any embodiment, the specific surface area SSA of the silicon-carbon composite material satisfies: $2\ m^2/g \leq SSA \leq 10\ m^2/g$; optionally, $3\ m^2/g \leq SSA \leq 7\ m^2/g$.

When the specific surface area SSA of the silicon-carbon composite material satisfies the range described above, the silicon-carbon composite material has a large specific surface area and relatively good dynamic performance, which is conducive to improving the initial coulombic efficiency of the battery.

In any embodiment, the silicon-carbon composite material includes carbon matrix particles and silicon nanoparticles. The carbon matrix particles include a three-dimensional network cross-linked pore structure; at least a part of the silicon nanoparticles is disposed in the three-dimensional network cross-linked pore structure.

The carbon matrix particles of the present application have a stable porous skeleton structure, with strong supporting capacity, which is manifested as relatively high stress resistance, and they have excellent mechanical properties and electrical conductivity. The carbon matrix particles include a three-dimensional network cross-linked pore structure, which provides a relatively large amount of space for embedding the silicon-based nanoparticles, and they can be used for storing a large amount of silicon, thereby effectively improving the silicon loading amount in the silicon-carbon composite material. After the carbon matrix particles and the silicon-based nanoparticles are compounded, the electrical conductivity of the silicon-carbon composite material can be improved, the volume effect of silicon during a lithium deintercalation process can be relieved, and the stress change of the silicon-based nanoparticles can be fully borne, such that the structural stability of the silicon-carbon composite material is ensured, and the cycle stability and the lithium storage capacity of the silicon-carbon composite material are improved. Therefore, when the silicon-carbon composite material is applied to a secondary battery, the cycle performance and energy density of the secondary battery can be improved.

In any embodiment, the silicon nanoparticles include one or more of silicon-oxygen compounds, pre-lithiated silicon-oxygen compounds, amorphous silicon, crystalline silicon, and silicon-carbon composites, and optionally amorphous silicon.

In any embodiment, the carbon matrix includes one or more of graphite, soft carbon, and hard carbon.

In any embodiment, a mass proportion of the silicon nanoparticles in the silicon-carbon composite material is greater than or equal to 40%, and optionally 40%-60%.

The negative electrode material used in the secondary battery of the present application realizes high loading of the silicon nanoparticles in the negative electrode material by using the carbon-based material having a three-dimensional network cross-linked pore structure, such that the silicon-carbon composite material has high capacity and can further improve the energy density of the battery.

In any embodiment, a ratio of a powder compaction density P11 $g/cm^3$ of the silicon-carbon composite material tested after 1 powder compaction under an action force of 20,000 N to a powder compaction density P21 $g/cm^3$ of the silicon-carbon composite material tested after 20 powder compactions under an action force of 20,000 N satisfies: $1.00 \leq P21/P11 \leq 1.20$, and optionally $1.02 \leq P21/P11 \leq 1.10$.

When the ratio of P21/P11 satisfies the range described above, the silicon-carbon composite material has relatively high specific capacity and relatively good pressure resistance, which improves the structural stability of the negative electrode film layer, thereby enabling the secondary battery containing the material to have relatively high energy density and relatively good cycle performance.

In any embodiment, the powder compaction density P11 $g/cm^3$ of the silicon-carbon composite material tested after 1 powder compaction under an action force of 20,000 N satisfies $1.10 \leq P11 \leq 1.40$, and optionally $1.12 \leq P11 \leq 1.35$.

When the powder compaction density P11 $g/cm^3$ of the silicon-carbon composite material after 1 powder compaction under an action force of 20,000 N satisfies the range described above, the negative electrode film layer has

relatively high compaction density, such that the secondary battery has relatively high energy density.

The compound represented by formula I is selected from one or more of the following compounds:

trimethyl phosphate

( 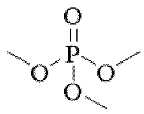 ),

triphenyl phosphate

( 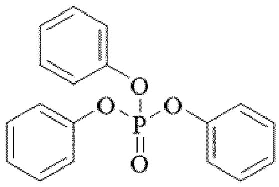 ),

tris(trimethylsilyl) phosphorus

( 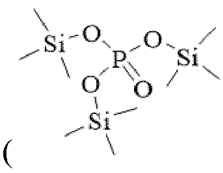 ),

tributyl phosphate

( 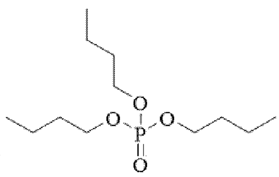 ),

diethyl sulfate

( 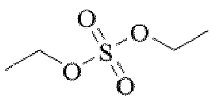 ),

bis(trimethylsilyl) sulfate

( 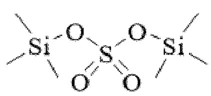 ),

ethyl silicate

( 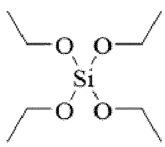 ),

tetrapropoxysilane

( 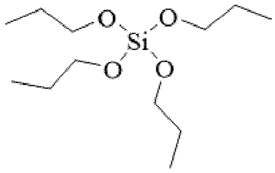 ),

tetraphenyl silicate

( 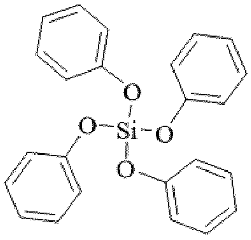 ),

tetraallyl silicate

( 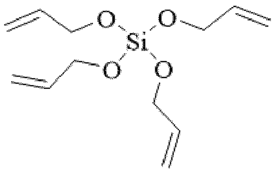 ),

and tetraethyl orthosilicate

( 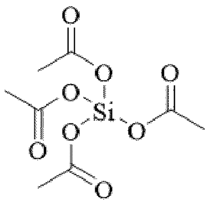 );

the compound represented by formula II is selected from one or more of the following compounds: diisopropyl sulfite

( 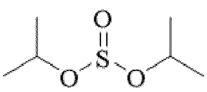 ),

tris(trimethylsilane) borate

( 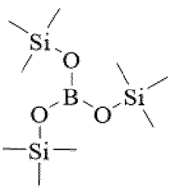 ),

triethyl borate

( 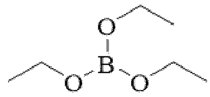 ),

triphenyl borate

( 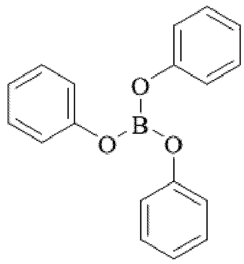 ),

and triisopropyl borate

( 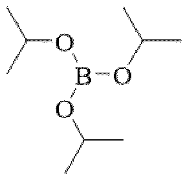 ).

The compound represented by formula I and the compound represented by formula II described above include a B, P, S or Si element. The B element and the Si element can be combined with the oxygen element in the active groups on the surface of the silicon-carbon composite material by providing empty orbitals, such that the effect of "passivating" the active groups is achieved, and the initial coulombic efficiency and the cycle performance of the battery are improved. The P element and the S element can be combined with the hydrogen element in the active groups on the surface of the silicon-carbon composite material by providing electrons, such that the effect of "passivating" the active groups is achieved, and the initial coulombic efficiency and the cycle performance of the battery are improved.

In any embodiment, the secondary battery includes at least one of a lithium ion battery, a sodium ion battery, a magnesium ion battery, and a potassium ion battery.

A second aspect of the present application provides an electric device, including the secondary battery according to the first aspect of the present application.

BRIEF DESCRIPTION OF THE DRAWINGS

FIG. 1 is a schematic diagram of a secondary battery according to one embodiment of the present application;

FIG. 2 is an exploded view of the secondary battery according to one embodiment of the present application as shown in FIG. 1;

FIG. 3 is a schematic diagram of an electric device using a secondary battery as a power source according to one embodiment of the present application.

Description of the reference numerals:
1: secondary battery; 11: housing; 12: electrode assembly; and 13: cover plate.

DETAILED DESCRIPTION

Hereinafter, embodiments of the binder, the preparation method, the electrode, the battery, and the electric device of the present application are specifically disclosed in detail with appropriate reference to the drawings. However, unnecessarily detailed descriptions may be omitted. For example, detailed descriptions of well-known matters and

repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer $\geq 2$, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

With the expansion of the application range of secondary batteries, the requirements for the performance of secondary batteries, such as energy density, have been gradually increasing. The silicon-based material has a high specific capacity and is suitable as a negative electrode material for high-energy-density batteries. However, the silicon-based material has a large volume expansion rate during the charging and discharging process, resulting in poor cycle performance of the batteries. Compared with the traditional carbon-based material, the silicon-based material is likely to have more surface groups introduced during the production and preparation process. For example, carboxyl or hydroxyl is easily introduced onto the surface of the silicon-based material during acid treatment, and amino is easily introduced onto the surface of the silicon-based material during alkali treatment. The existence of the surface groups is likely to consume active lithium, which influences the capacity performance of the battery.

Based on this, the present application provides a secondary battery including: a negative electrode plate and an electrolyte. The negative electrode plate includes a silicon-carbon composite material having a three-dimensional network cross-linked pore structure; the electrolyte includes a first component, the first component including at least one of compounds represented by formula I and formula II,

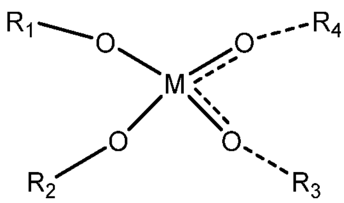
formula I

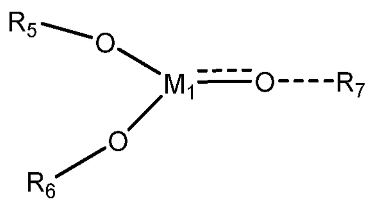
formula II

where

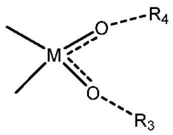

represents that M and O may optionally be single or double bonded, and when M and O are double bonded, there is no bond between O and $R_4$ or $R_3$; $-M_1$----O----$R_7$ represents that $M_1$ and O may optionally be single or double bonded, and when $M_1$ and O are double bonded, there is no bond between O and $R_7$; $R_1$, $R_2$, $R_3$, $R_4$, $R_5$, $R_6$, and $R_7$ are each independently selected from fluorine, fluorine-substituted or unsubstituted $C_1$-$C_{10}$ alkyl, aryl, carbonyl, carboxyl, an ester group, cyano, a silane group, or an ether group, and M and $M_1$ each independently include P, S, Si, or B.

As used herein, the term "$C_1$-$C_{10}$ hydrocarbyl" refers to a hydrocarbon group having 1 to 10 carbon atoms. Non-limiting examples of $C_1$-$C1_0$ hydrocarbyl may include methyl ($CH_3$-), ethyl ($C_2H_5$-), isopropyl ($(CH_3)_2CH$-), vinyl ($CH_2$=CH-), propynyl (HC=$CCH_2$-), and methylene (-$CH_2$-).

As used herein, "aryl" refers to a group formed by the loss of one hydrogen atom from an aromatic hydrocarbon molecule. Non-limiting examples of aryl include phenyl, naphthyl, and the like.

Herein, "carbonyl" refers to

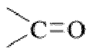.

Herein, "carboxyl" refers to

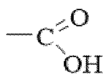.

As used herein, "ester group" refers to

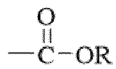,

where R is $C_1$-$C_3$ hydrocarbyl.

Herein, "cyano" refers to

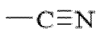.

Herein, the term "silane group" refers to the -Si($R_1$)($R_2$)($R_3$) group, where $R_1$, $R_2$, and $R_3$ are each independently selected from hydrogen and substituted or unsubstituted $C_1$-$C_3$ alkyl. As an example, silane groups include, but are not limited to, -$SiH_3$ and -$Si(CH_3)_3$.

As used herein, "ether group" refers to -R-O-R'-, where R and R' are $C_1$-$C_3$ hydrocarbyl.

Herein, the three-dimensional network cross-linked pore structure generally refers to a structure in which two or more pores are intercommunicated or staggered and share a pore volume with each other in a silicon-carbon composite material, particularly in a pore structure formed by carbon matrix particles.

The pore structure of the silicon-carbon composite material can be tested using equipment and methods known in the art. For example, the test can be performed by using a scanning electron microscope (e.g., ZEISS Sigma 300). As an example, the test can be performed according to the following steps: Firstly, a negative electrode plate including the silicon-carbon composite material is cut into a test sample with a certain size (e.g., 6 mm × 6 mm), the test sample is sandwiched between two electrically and thermally conductive sheets (such as copper foils), the test sample and the sheets are stuck and fixed with an adhesive (such as double-sided adhesive) and pressed with a flat iron block with a certain mass (such as about 400 g) for a certain period of time (such as 1 h) to make the gap between the test sample and the copper foils as small as possible, then the edges are trimmed neatly with scissors, and the sample is stuck to a sample stage with a conductive adhesive, with the sample slightly extending beyond the edge of the sample stage. Then, the sample stage is placed into a sample holder and locked in place, an argon ion cross-section polisher (such as IB-19500CP) is turned on and evacuated (e.g., 10 Pa to 4 Pa), the argon flow (e.g., 0.15 MPa), voltage (e.g., 8 KV) and polishing time (e.g., 2 h) are set, the sample stage is adjusted to swing mode, and the polishing is started. After the polishing is completed, an image of the ion-polished cross-sectional morphology (CP) of the test sample is obtained by using a scanning electron microscope (such as ZEISS Sigma 300).

The silicon-carbon composite material having a three-dimensional network cross-linked pore structure has a stable porous skeleton and good mechanical strength, and can effectively reduce the volume change of silicon before and after charging and discharging while loading a high silicon content, thereby improving the cycle performance of the battery. Meanwhile, the M element of the first component in the electrolyte can be combined with active groups, such as hydroxyl, carboxyl, and amino, on the silicon-carbon composite material, such that the effect of stabilizing active groups is achieved, the consumption of active lithium by the active groups is reduced, the initial coulombic efficiency of the battery is improved, and the capacity performance level of the battery is improved. The stabilization of the active groups on the silicon-carbon composite material can further reduce the capacity attenuation of the battery during a cycling process and improve the cycle performance of the battery. Moreover, the first component additive can generate inorganic substances containing M element, such as phosphate and sulfate, in a solid electrolyte film (SEI) on the surface of the silicon-carbon composite material, such that the strength of the SEI film can be further improved, and the cracking of the SEI film along with the expansion of a silicon negative electrode can be reduced, thereby improving the cycle performance of the battery.

In some embodiments, a specific surface area of the silicon-carbon composite material is SSA $m^2/g$, a mass proportion of the first component based on the total mass of the electrolyte is EL g/g, and EL:SSA is 0.0001-0.03, and optionally 0.0004-0.01.

In some embodiments, a specific surface area of the silicon-carbon composite material is SSA $m^2/g$, a mass proportion of the first component in the electrolyte is EL g/g, and EL:SSA is optionally 0.0001 $g/m^2$, 0.0002 $g/m^2$, 0.0003 $g/m^2$, 0.0004 $g/m^2$, 0.0005 $g/m^2$, 0.0006 $g/m^2$, 0.0007 $g/m^2$, 0.0008 $g/m^2$, 0.0009 $g/m^2$, 0.001 $g/m^2$, 0.002 $g/m^2$, 0.003 $g/m^2$, 0.004 $g/m^2$, 0.005 $g/m^2$, 0.006 $g/m^2$, 0.007 $g/m^2$, 0.008 $g/m^2$, 0.009 $g/m^2$, 0.01 $g/m^2$, 0.02 $g/m^2$, or 0.03 $g/m^2$.

Herein, the specific surface area SSA has a well-known meaning in the art, is generally expressed in the unit of $m^2/g$, and can be determined by methods and instruments known in the art. For example, the specific surface area can be determined by the analysis and testing method of specific surface area by inert gas (such as nitrogen) adsorption with reference to GB/T 19587-2017 and calculated by the Brunauer Emmett Teller (BET) method. The analysis and testing method of specific surface area by nitrogen adsorption can be performed by using a Tri-Star model 3020 specific surface area and pore size analyzer from Micromeritics, USA.

The larger the specific surface area of the silicon-carbon composite material is, the higher the content of the surface functional groups is. When the ratio EL:SSA of the mass proportion of the first component in the electrolyte to the specific surface area SSA of the silicon-carbon composite material satisfies the range described above, the first component can effectively perform the function of "passivating" the active groups on the silicon-carbon composite material, thereby improving the capacity performance and the cycle performance of the battery.

In some embodiments, a mass proportion of the first component in the electrolyte is EL g/g. In the outer peripheral region of the silicon-carbon composite material, a mass percentage content of the silicon element in the silicon-carbon composite material relative to the total mass of the silicon-carbon composite material is B1. The outer peripheral region of the silicon-carbon composite material is a region which extends from the outer surface of the silicon-carbon composite material to the interior of the silicon-carbon composite material by a distance within r/2, where r represents a short diameter of the silicon-carbon composite material. EL:B1 is 0.001-0.1, and optionally 0.005-0.06.

The particle size of the silicon-carbon composite material can be characterized by a three-axis diameter characterization method, specifically as follows: The long diameter 1 and the short diameter r are determined on a plane projection diagram of the silicon-carbon composite material, and the thickness h of the silicon-carbon composite material is determined in the vertical direction of the projection plane. It can also be interpreted as placing the silicon-carbon composite material in a rectangular parallelepiped tangent to the silicon-carbon composite material, where the long side of the rectangular parallelepiped is 1, the short side is r, and the thickness is h, so as to reflect the actual size of the silicon-carbon composite material.

The content of the silicon element can be determined by an inductively coupled plasma (ICP) test, specifically as follows: A silicon-carbon composite material is taken as a sample and the sample is digested with aqua regia and hydrofluoric acid (HF). The solution digested for 15 min and the completely digested solution are subjected to an ICP test. The silicon content in the solution digested for 45 min is the silicon content of "the outer peripheral region of the silicon-carbon composite material".

In some embodiments, the ratio EL:B1 of the mass proportion of the first component in the electrolyte to the mass percentage content B1 of the silicon element in the silicon-carbon composite material relative to the total mass of the silicon-carbon composite material is optionally 0.001, 0.002, 0.003, 0.004, 0.005, 0.006, 0.007, 0.008, 0.009, 0.01, 0.02, 0.03, 0.04, 0.05, 0.06, 0.07, 0.08, 0.09, or 0.1.

Compared with the internal silicon element, the silicon element in the outer peripheral region of the silicon-carbon composite material is easier to accumulate residual active groups during a preparation process, and is less likely to be restrained by a carbon skeleton, leading to more significant volume expansion. When the ratio of the mass proportion of the first component in the electrolyte to the mass percentage content B1 of the silicon element in the silicon-carbon composite material relative to the total mass of the silicon-carbon composite material satisfies the range described above, it is conducive to "passivating" the active groups on the silicon element through the first component, thereby further improving

the initial coulombic efficiency and the cycle capacity retention rate of the battery.

In some embodiments, a total pore volume of pores with a pore size greater than 100 nm in the silicon-carbon composite material is V1 $cm^3/g$, a ratio EL:V1 of a mass proportion EL of the first component in the electrolyte to a total pore volume V1 of pores with a pore size greater than 100 nm in the silicon-carbon composite material is 1-30, and optionally 2-15.

GB/T 19587-2004 can be referred to the test method for pores with different pore sizes. The Barret joyner Halenda (BJH) method for testing mesoporous pore size distribution is used. Under the micro-mesoporous model, the gas adsorption-desorption method is used for testing, and the data of the adsorption branch are selected. Then, the total pore volume V1 of the pores with a pore size greater than 100 nm is determined and statistically calculated.

In some embodiments, a total pore volume of pores with a pore size greater than 100 nm in the silicon-carbon composite material is V1 $cm^3/g$, a ratio EL:V1 of a mass proportion EL of the first component in the electrolyte to a total pore volume V1 of pores with a pore size greater than 100 nm in the silicon-carbon composite material is preferably 1, 2, 3, 4, 5, 6, 7, 8, 9, 10, 11, 12, 13, 14, 15, 16, 17, 18, 19, 20, 21, 22, 23, 24, 25, 26, 27, 28, 29, or 30.

When the ratio EL:V1 of the mass proportion of the first component in the electrolyte to the total pore volume V1 of pores with a pore size greater than 100 nm in the silicon-carbon composite material satisfies the range described above, the first component can easily enter the pore structure of the silicon-carbon composite material to form mutual cooperation with the pore structure, so as to further improve the capacity performance level and the cycle capacity retention rate of the battery.

In some embodiments, in the outer peripheral region of the silicon-carbon composite material, a mass percentage content A1 of the carbon element of the silicon-carbon composite material relative to the total mass of the silicon-carbon composite material and the mass percentage content B1 of the silicon element of the silicon-carbon composite material relative to the total mass of the silicon-carbon composite material satisfy $0.8 \leq B\ 1/Al \leq 2.5$, optionally $1 \leq B1/Al \leq 1.5$.

The content of the carbon element can be determined by the infrared absorption method for carbon-sulfur content analysis according to the GB/T 20123-2006 test standard, specifically as follows: A silicon-carbon composite material is taken as a sample, and the carbon content at 20 min of the test is the carbon content of the outer peripheral region of the silicon-carbon composite material.

In the outer peripheral region of the silicon-carbon composite material, when the mass percentage content A1 of the carbon element of the silicon-carbon composite material relative to the total mass of the silicon-carbon composite material and the mass percentage content B1 of the silicon element of the silicon-carbon composite material relative to the total mass of the silicon-carbon composite material satisfy the range described above, the mass of silicon in the pore structure of the silicon-carbon composite material is relatively high, which can significantly increase the capacity of the negative electrode active material, moreover, the voltage for the intercalation of metal ions is relatively low, which is conducive to the intercalation of the metal ions, such that the cycle performance of the secondary battery is improved. Meanwhile, the three-dimensional network cross-linked pore structure can inhibit the volume expansion of silicon during a cycling process and improve the structural stability of the negative electrode active material, thereby further improving the cycle performance of the battery.

In some embodiments, the mass percentage content A of the carbon element of the silicon-carbon composite material relative to the total mass of the silicon-carbon composite material has a decreasing trend in a direction from the geometric center of the silicon-carbon composite material to the outer surface of the silicon-carbon composite material, while the mass percentage content B of the silicon element of the silicon-carbon composite material relative to the total mass of the silicon-carbon composite material has an increasing trend in a direction from the geometric center of the silicon-carbon composite material to the outer surface of the silicon-carbon composite material.

Due to the example that the silicon-carbon composite material may be irregularly shaped, the geometric center of the silicon-carbon composite material may be equivalent to the geometric center of a rectangular parallelepiped tangential thereto. In the direction from the geometric center of the silicon-carbon composite material to the outer surface of the silicon-carbon composite material, the mass percentage content A of the carbon element is gradually reduced, while the mass percentage content B of the silicon element is gradually increased. As a result, the content of silicon in the pore structure of the silicon-carbon composite material is gradually increased, and thus the content of silicon is relatively high, which can significantly increase the capacity of the negative electrode active material. Moreover, the content of the silicon element is continuously increased from the outer surface to the center, such that the active functional groups on the surface of silicon-based particles are continuously reduced, and the inhibitory effect of carbon-based particles on the expansion of the silicon element becomes increasingly significant, thereby further improving the capacity performance and the cycle performance of the battery.

In some embodiments, the specific surface area SSA of the silicon-carbon composite material satisfies: $2\ m^2/g \leq SSA \leq 10\ m^2/g$; optionally, $3\ m^2/g \leq SSA \leq 7\ m^2/g$.

In some embodiments, the specific surface area SSA of the silicon-carbon composite material is optionally 2 $m^2/g$, 3 $m^2/g$, 4 $m^2/g$, 5 $m^2/g$, 6 $m^2/g$, 7 $m^2/g$, 8 $m^2/g$, 9 $m^2/g$, or 10 $m^2/g$, or a range formed by any two of the values

described above.

When the specific surface area SSA of the silicon-carbon composite material satisfies the range described above, the silicon-carbon composite material has a large specific surface area and relatively good dynamic performance, which is conducive to improving the initial coulombic efficiency of the battery.

In some embodiments, the silicon-carbon composite material includes: carbon matrix particles and silicon nanoparticles. The carbon matrix particles include a three-dimensional network cross-linked pore structure, and at least a part of the silicon nanoparticles is disposed in the three-dimensional network cross-linked pore structure.

The carbon matrix particles of the present application have a stable porous skeleton structure, with strong supporting capacity, which is manifested as relatively high stress resistance, and they have excellent mechanical properties and electrical conductivity. The carbon matrix particles include a three-dimensional network cross-linked pore structure, which provides a relatively large amount of space for embedding the silicon-based nanoparticles, and they can be used for storing a large amount of silicon, thereby effectively improving the silicon loading amount in the silicon-carbon composite material. After the carbon matrix particles and the silicon-based nanoparticles are compounded, the electrical conductivity of the silicon-carbon composite material can be improved, the volume effect of silicon during a lithium deintercalation process can be relieved, and the stress change of the silicon-based nanoparticles can be fully borne, such that the structural stability of the silicon-carbon composite material is ensured, and the cycle stability and the lithium storage capacity of the silicon-carbon composite material are improved. Therefore, when the silicon-carbon composite material is applied to a secondary battery, the cycle performance and energy density of the secondary battery can be improved.

In some embodiments, the silicon nanoparticles include one or more of silicon-oxygen compounds, amorphous silicon, crystalline silicon, and silicon-carbon composites, and optionally amorphous silicon.

In some embodiments, the carbon matrix includes one or more of graphite, soft carbon, and hard carbon.

In some embodiments, a mass proportion of the silicon nanoparticles in the silicon-carbon composite material is greater than or equal to 40%, and optionally 40%-60%.

In some embodiments, the mass proportion of the silicon nanoparticles in the silicon-carbon composite material is optionally 40%, 45%, 50%, 55%, or 60%.

The mass of the silicon nanoparticles in the silicon-carbon composite material can be determined by methods and equipment known in the art. For example, it can be determined with reference to the EPA 6010D-2014 standard. Specifically, inductively coupled plasma emission spectrometry (ICP-OES) can be used for elemental analysis. A test solid is dissolved into a liquid with a strong acid, then the liquid is introduced into an ICP light source in an atomization mode, and further, after test gaseous atoms are ionized and excited in a strong magnetic field, they return from the excited state to the ground state. During the process described above, the energy is released and recorded as different characteristic spectral lines for the quantitative analysis of trace elements.

The negative electrode material used in the secondary battery of the present application realizes high loading of the silicon nanoparticles in the negative electrode material by using the carbon-based material having a three-dimensional network cross-linked pore structure, such that the silicon-carbon composite material has high capacity and can further improve the energy density of the battery.

In some embodiments, a ratio of a powder compaction density P11 g/cm$^3$ of the silicon-carbon composite material tested after 1 powder compaction under an action force of 20,000 N to a powder compaction density P21 g/cm$^3$ of the silicon-carbon composite material tested after 20 powder compactions under an action force of 20,000 N satisfies: $1.00 < P21/P11 \leq 1.20$, and optionally $1.02 \leq P21/P11 \leq 1.10$.

When the ratio of P21/P11 satisfies the range described above, the silicon-carbon composite material has relatively high specific capacity and relatively good pressure resistance, which improves the structural stability of the negative electrode film layer, thereby enabling the secondary battery containing the material to have relatively high energy density and relatively good cycle performance.

In some embodiments, the powder compaction density P11 g/cm$^3$ of the silicon-carbon composite material tested after 1 powder compaction under an action force of 20,000 N satisfies $1.10 \leq P11 \leq 1.40$, and optionally $1.12 \leq P11 \leq 1.35$.

When the powder compaction density P11 g/cm$^3$ of the silicon-carbon composite material after 1 powder compaction under an action force of 20,000 N satisfies the range described above, the negative electrode film layer has relatively high compaction density, such that the secondary battery has relatively high energy density.

In some embodiments, the compound represented by formula I is selected from one or more of the following compounds:

trimethyl phosphate

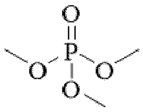

,

triphenyl phosphate

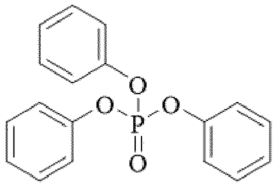

,

tris(trimethylsilyl) phosphorus

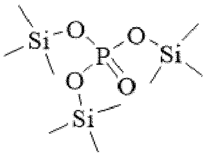

,

tributyl phosphate

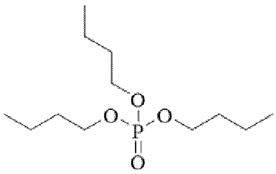

,

diethyl sulfate

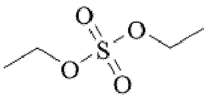

,

bis(trimethylsilyl) sulfate

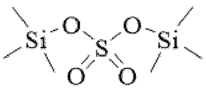

,

ethyl silicate

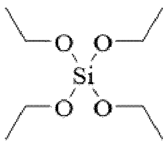

,

tetrapropoxysilane

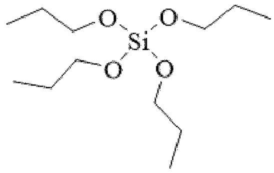

,

tetraphenyl silicate

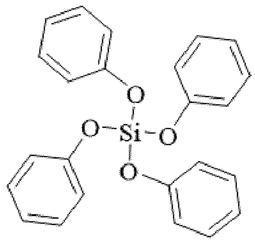

,

tetraallyl silicate

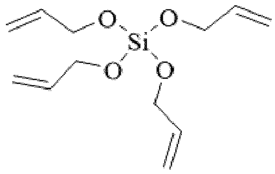

,

and tetraethyl orthosilicate

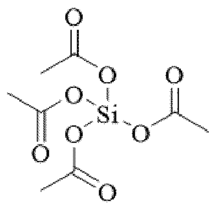

;

the compound represented by formula II is selected from one or more of the following compounds:
diisopropyl sulfite

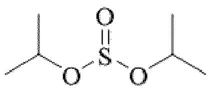

,

tris(trimethylsilane) borate

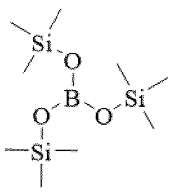

,

triethyl borate

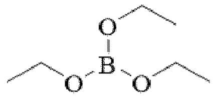

,

triphenyl borate

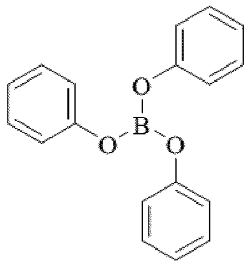

,

and triisopropyl borate

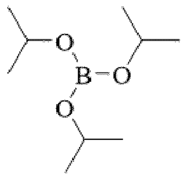

.

The compound represented by formula I and the compound represented by formula II described above include a B, P, S or Si element. The B element and the Si element can be combined with the oxygen element in the active groups on the surface of the silicon-carbon composite material by providing empty orbitals, such that the effect of "passivating" the active groups is achieved, and the initial coulombic efficiency and the cycle performance of the battery are improved. The P element and the S element can be combined with the hydrogen element in the active groups on the surface of the silicon-carbon composite material by providing electrons, such that the effect of "passivating" the active groups is achieved, and the initial coulombic efficiency and the cycle performance of the battery are improved.

In some embodiments, the secondary battery includes a negative electrode plate. The negative electrode plate includes a negative electrode current collector and a negative electrode film layer disposed on at least one surface of the negative electrode current collector, and the negative electrode film layer includes a negative electrode active material.

As an example, the negative electrode current collector has two surfaces opposite to each other in its own thickness direction, and the negative electrode film layer is disposed on any one or both of the two opposite surfaces of the negative electrode current collector.

In some embodiments, a metal foil or a composite current collector may be used as the negative electrode current collector. For example, as the metal foil, a copper foil may be used. The composite current collector may include a polymer material substrate and a metal layer formed on at least one surface of the polymer material substrate. The composite current collector can be fabricated by forming a metal material (copper, copper alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, the negative electrode film layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, a carbon dot, a carbon nanotube, graphene, and a carbon nanofiber.

In some embodiments, the negative electrode film layer further optionally includes other auxiliary agents, such as a thickener (e.g., sodium carboxymethylcellulose (CMC-Na)).

In some embodiments, the negative electrode plate can be prepared in the following manner: dispersing the components described above for preparing the negative electrode plate, such as the negative electrode active material, the conductive agent, the binder, and any other components, in a solvent (such as deionized water) to form a negative electrode slurry; and coating the negative electrode current collector with the negative electrode slurry, and performing

drying, cold pressing, and other processes, such that the negative electrode plate can be obtained.

In some embodiments, the secondary battery includes a positive electrode plate. The positive electrode plate includes a positive electrode current collector and a positive electrode film layer disposed on at least one surface of the positive electrode current collector, and the positive electrode film layer includes a positive electrode active material according to the first aspect of the present application.

As an example, the positive electrode current collector has two surfaces opposite to each other in its own thickness direction, and the positive electrode film layer is disposed on any one or both of the two opposite surfaces of the positive electrode current collector.

In some embodiments, a metal foil or a composite current collector may be used as the positive electrode current collector. For example, as the metal foil, an aluminum foil may be used. The composite current collector may include a polymer material substrate and a metal layer formed on at least one surface of the polymer material substrate. The composite current collector can be formed by forming a metal material (aluminum, aluminum alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, a positive electrode active material for use in batteries known in the art may be used as the positive electrode active material. As an example, the positive electrode active material may include at least one of the following materials: a lithium-containing phosphate with an olivine structure, a lithium transition metal oxide, and respective modified compounds thereof. However, the present application is not limited to these materials, and other traditional materials that can be used as positive electrode active materials for batteries may also be used. These positive electrode active materials may be used alone or in combination of two or more. Examples of the lithium transition metal oxide may include, but are not limited to, at least one of a lithium cobalt oxide (such as $LiCoO_2$), a lithium nickel oxide (such as $LiNiO_2$), a lithium manganese oxide (such as $LiMnO_2$ or $LiMn_2O_4$), a lithium nickel cobalt oxide, a lithium manganese cobalt oxide, a lithium nickel manganese oxide, a lithium nickel cobalt manganese oxide (such as $LiNi_{1/3}Co_{1/3}Mn_{1/3}O_2$ (also referred to as $NCM_{333}$), $LiNi_{0.5}Co_{0.2}Mn_{0.3}O_2$ (also referred to as $NCM_{523}$), $LiNi_{0.5}Co_{0.25}Mn_{0.25}O_2$ (also referred to as $NCM_{211}$), $LiNi_{0.6}Co_{0.2}Mn_{0.2}O_2$ (also referred to as $NCM_{622}$), $LiNi_{0.8}Co_{0.1}Mn_{0.1}O_2$ (also referred to as NCM811)), a lithium nickel cobalt aluminum oxide (such as $LiNi_{0.85}Co_{0.15}Al_{0.05}O_2$), and modified compounds thereof. Examples of the lithium-containing phosphate with an olivine structure may include, but are not limited to, at least one of lithium iron phosphate (such as $LiFePO_4$ (also referred to as LFP)), a composite material of lithium iron phosphate and carbon, lithium manganese phosphate (such as $LiMnPO_4$), a composite material of lithium manganese phosphate and carbon, lithium manganese iron phosphate, and a composite material of lithium manganese iron phosphate and carbon.

In some embodiments, the positive electrode active material is a nickel-rich material, and the molar proportion of a nickel element in the transition metal of the positive electrode active material is greater than 85%.

In some embodiments, the positive electrode film layer further optionally includes a binder. As an example, the binder may include at least one of polyvinylidene difluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin.

In some embodiments, the positive electrode film layer further optionally includes a conductive agent. As an example, the conductive agent may include at least one of superconducting carbon, acetylene black, carbon black, Ketjen black, a carbon dot, a carbon nanotube, graphene, and a carbon nanofiber.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, such that the positive electrode plate can be obtained.

In some embodiments, the secondary battery further includes a separation film. The present application does not particularly limit the type of the separation film, and any porous-structure separation film known to have good chemical stability and mechanical stability may be selected and used.

In some embodiments, the separation film may be made of a material selected from at least one of glass fiber, non-woven fabric, polyethylene, polypropylene, and polyvinylidene difluoride. The separation film may be a single-layer film or a multi-layer composite film, and there is no particular limitation on this. When the separation film is a multi-layer composite film, the materials of the layers may be the same or different, and there is no particular limitation on this.

In some embodiments, the secondary battery includes at least one of a lithium ion battery, a sodium ion battery, a magnesium ion battery, and a potassium ion battery.

In one embodiment of the present application, provided is an electric device, which includes the secondary battery according to any one of the embodiments.

The present application does not particularly limit the shape of the secondary battery, and it may have a cylindrical shape, a prismatic shape, or any other shape. For example, FIG. 1 shows a secondary battery 1 having a prismatic structure as one example.

In some embodiments, referring to FIG. 2, the outer packaging may include a housing 11 and a cover plate 13. The housing 11 may include a bottom plate and a side plate connected to the bottom plate, and the bottom plate and the side plate define, in an enclosing manner, an accommodating cavity. The housing 11 is provided with an opening communicating with the accommodating cavity, and the cover plate 13 is capable of lidding the opening to close the accommodating cavity. The positive electrode plate, the negative electrode plate, and the separation film may be subjected to a winding process or a stacking process to form an electrode assembly 12. The electrode assembly 12 is packaged in the accommodating cavity. The electrolyte is infiltrated into the electrode assembly 12. The number of the electrode assembly 12 included in the secondary battery 1 may be one or more, and those skilled in the art can select the number according to specific and actual needs.

The electric device includes the secondary battery provided by the present application. The secondary battery may be used as a power source for the electric device, or as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

FIG. 3 shows an electric device as one example. The electric device is a pure electric vehicle, a hybrid electric vehicle, a plug-in hybrid electric vehicle, or the like. To meet the requirements of the electric device for high power and high energy density of the secondary battery, the battery pack or the battery module may be used.

As another example, the device may be a mobile phone, a tablet computer, a laptop computer, or the like. The device is generally required to be light and thin, and a secondary battery can thus be used as a power source.

## Examples

Hereinafter, examples of the present application are described. The examples described below are illustrative and are merely used to explain the present application, and they should not be construed as limiting the present application. Examples without techniques or conditions specified therein are implemented according to techniques or conditions described in the literature in the art or according to product instructions. Reagents or instruments used herein without specified manufacturers are all commercially available conventional products.

### I. Secondary Battery

Example 1

(1) Preparation of silicon-carbon composite material

A gas containing a silicon precursor was provided to carbon matrix particles having a three-dimensional network cross-linked pore structure; silicon nanoparticles attached to the carbon matrix particles were generated from the silicon precursor through chemical vapor deposition to obtain a silicon-carbon composite material. The silicon precursor was silane and the carbon matrix was hard carbon.

(2) Preparation of negative electrode plate

A negative electrode active material (silicon-carbon composite material), conductive carbon black, a thickener (sodium carboxymethylcellulose (CMC)) and a binder (styrene-butadiene rubber emulsion (SBR)) were thoroughly mixed with stirring according to a weight ratio of 96.5:1.0:1.0:1.5 in a proper amount of deionized water to form a uniform negative electrode slurry. Then, a negative electrode current collector was coated with the negative electrode slurry, and the coated negative electrode current collector was subjected to processes such as drying to obtain a negative electrode plate.

(3) Preparation of positive electrode plate

An aluminum foil with a thickness of 8 μm was used as a positive electrode current collector. A positive electrode active material ($LiNi_{0.8}Co_{0.8}Mn_{0.1}O_2$ ($NCM_{811}$)), a conductive agent (acetylene black), and a binder (polyvinylidene difluoride (PVDF)) were dissolved according to a weight ratio of 93:2:5 in a solvent (N-methylpyrrolidone (NMP)), and thoroughly mixed well with stirring to obtain a positive slurry. Then, a positive electrode current collector was uniformly coated with the positive electrode slurry, and the coated positive electrode current collector was subjected to drying, cold pressing and cutting to obtain a positive electrode plate.

(4) Preparation of electrolyte

Ethylene carbonate (EC), ethyl methyl carbonate (EMC), and diethyl carbonate (DEC) were mixed according to a volume ratio of 1:1:1 to obtain an organic solvent. Then, a fully dried lithium salt ($LiPF_6$) was dissolved in the mixed organic solvent, and 1 wt% tris(trimethylsilane) borate was added as an additive to prepare an electrolyte with a lithium salt concentration of 1 mol/L.

(5) Separation film

A polypropylene film is used as the separation film.

(6) Preparation of battery

The positive electrode plate, the separation film, and the negative electrode plate were stacked in sequence, with the separation film placed between the positive electrode plate and the negative electrode plate to fulfill the function of separation. Then, the stack was wound to obtain a bare battery cell, and the tabs were welded to the bare battery cell. The bare battery cell was placed in an aluminum shell, which was then baked at 80 °C to remove water, injected with an electrolyte, and sealed to obtain an uncharged battery. The uncharged battery was then subjected to the processes of standing, hot and cold pressing, formation, shaping, capacity testing, and the like sequentially, to obtain the lithium ion battery product of Example 1.

Examples 2-5

The preparation methods for the batteries in Examples 2-5 were similar to those in Example 2 except that the type of the first component was adjusted. The specific parameters are shown in Table 1.

Examples 6-9

The preparation methods for the batteries in Examples 6-9 were similar to those in Example 2 except that the content of the first component was adjusted. The specific parameters are shown in Table 1.

Examples 10-13

The preparation methods for the batteries in Examples 10-13 were similar to those in Example 2 except that the deposition positions of silicon-based particles in the silicon-carbon composite material were adjusted to adjust the ration of EL:B1. The specific parameters are shown in Table 1.

Examples 14-17

The preparation methods for the batteries in Examples 14-17 were similar to those in Example 2 except that the proportion of large and small pores in the silicon-carbon composite material was adjusted to adjust the ratio of EL:V1.

Comparative Example 1

The preparation method for the battery in Comparative Example 1 was similar to that in Example 1 except that the first component was not added to the electrolyte.

Comparative Example 2

The preparation method for the battery in Comparative Example 2 was similar to that in Example 1 except that the pore structure of the carbon matrix particles in Comparative Example 2 was a honeycomb-like pore structure.

Comparative Example 3

The preparation method for the battery in Comparative Example 3 was similar to that in Example 2 except that the pore structure of the carbon matrix particles in Comparative Example 3 was a honeycomb-like pore structure.

Comparative Example 4

The preparation method for the battery in Comparative Example 4 was similar to that in Example 3 except that the pore structure of the carbon matrix particles in Comparative Example 4 was a honeycomb-like pore structure.

Comparative Example 5

The preparation method for the battery in Comparative Example 5 was similar to that in Example 4 except that the pore structure of the carbon matrix particles in Comparative Example 5 was a honeycomb-like pore structure.

Comparative Example 6

The preparation method for the battery in Comparative Example 6 was similar to that in Example 5 except that the pore structure of the carbon matrix particles in Comparative Example 6 was a honeycomb-like pore structure.

**II. Test Method**

1. Silicon-carbon composite material

1) Structural characterization of silicon-carbon composite material

The pore structure of the silicon-carbon composite material can be tested using equipment and methods known in the art. For example, the test can be performed by using a scanning electron microscope (e.g., ZEISS Sigma 300). As an example, the test can be performed according to the following steps: Firstly, a negative electrode plate including the silicon-carbon composite material was cut into a test sample with a certain size (e.g., 6 mm × 6 mm), the test sample was sandwiched between two electrically and thermally conductive sheets (such as copper foils), the test sample and the sheets were stuck and fixed with an adhesive (such as double-sided adhesive) and pressed with a flat iron block with a certain mass (such as about 400 g) for a certain period of time (such as 1 h) to make the gap between the test sample and the copper foils as small as possible, then the edges were trimmed neatly with scissors, and the sample was stuck to a sample stage with a conductive adhesive, with the sample slightly extending beyond the edge of the sample stage. Then, the sample stage was placed into a sample holder and locked in place, an argon ion cross-section polisher (such as IB-19500CP) was turned on and evacuated (e.g., 10 Pa to 4 Pa), the argon flow (e.g., 0.15 MPa), voltage (e.g., 8 KV) and polishing time (e.g., 2 h) were set, the sample stage was adjusted to swing mode, and the polishing was started. After the polishing was completed, an image of the ion-polished cross-sectional morphology (CP) of the test sample was obtained by using a scanning electron microscope (such as ZEISS Sigma 300).

2) Specific surface area SSA of silicon-carbon composite material

The specific surface area was determined by the gas adsorption method according to the GB/T 19587-2017 test standard, specifically as follows: A battery was disassembled and a powder was scraped from the negative electrode. After a binder was removed by high-temperature ablation, the powder material was taken as a silicon-carbon composite material sample, and a sample tube was immersed in liquid nitrogen at -196 °C. The adsorption amount of nitrogen on the solid surface under different pressures was determined under a relative pressure of 0.05-0.30. The monolayer adsorption amount of the sample was obtained based on the BET multilayer adsorption theory and its formula thereof, and thus the specific surface area of the negative electrode active material was calculated.

The calculation formula of BET is as follows:

$$\frac{P/P_0}{n_a(1-P/P_0)} = \frac{1}{n_m C} + \frac{C-1}{n_m C} \cdot \frac{P}{P_0}$$

where $n_a$ represents the amount of adsorbed gas, in mol/g; $p/p_0$ represents the relative pressure; nm represents the monolayer adsorption amount; C represents the adjustment parameter for limiting the number of adsorption layers on the adsorbent surface.

3) Pore size of silicon-carbon composite material

The pore size was determined by the gas adsorption method according to the GB/T 19587-2017 and GB/T 21650.2-2008 test standards, specifically as follows: A silicon-carbon composite material was taken as a sample, and the sample tube was immersed in liquid nitrogen at -196 °C. Nitrogen was adsorbed onto the test material under a relative pressure of 0-1. The pore size distribution of the porous material was characterized based on the relationship diagram of the volume of pores at different size levels vs. the corresponding partial pressures.

4) Powder compaction density

The powder compaction density was determined by using an electronic pressure testing machine (such as UTM7305) with reference to GB/T 24533-2009: A test powder sample with a given mass G was placed on a special compaction mold (with a bottom area S). Different pressures (20,000 N or 50,000 N in the present application) were applied. A pressure was maintained for 20 s and then released. After waiting for 10 s, the thickness H of the compacted powder under the applied pressure was read from the device. The compaction density under the applied pressure was calculated as G/(H*S).

5) Characterization of distribution of silicon and carbon elements in silicon-carbon composite material

The element distribution on the cross-section of the particles was determined by the energy-dispersive spectroscopy for ion-polished particle cross-section analysis according to the GB-T17359-2012 test standard.

6) Test of content of silicon element in silicon-carbon composite material

The content of the silicon element was determined by an inductively coupled plasma (ICP) test, specifically as follows: A silicon-carbon composite material was taken as a sample, and the sample was digested with aqua regia and hydrofluoric acid (HF). The solution digested for 15 min and the completely digested solution were subjected to an ICP test. The silicon content in the solution digested for 45 min was the silicon content of "the outer peripheral region of the silicon-carbon composite material", and the difference between the silicon content in the completely digested solution and the silicon content in the solution digested for 1 h was the silicon content of "the central region of the silicon-carbon composite material".

7) Test of content of carbon element in silicon-carbon composite material

The content of the carbon element was determined by the infrared absorption method for carbon-sulfur content analysis according to the GB/T 20123-2006 test standard, specifically as follows: A silicon-carbon composite material was taken as a sample. The carbon content of the silicon-carbon composite material at 20 min in the test was the carbon content of "the outer peripheral region of the silicon-carbon composite material", and the difference between the carbon content of the silicon-carbon composite material at 20 min of the test and the carbon content of the outer peripheral region of the silicon-carbon composite material at the end of the test was the carbon content of "the outer peripheral region of the silicon-carbon composite material".

8) Test of short diameter r of silicon-carbon composite material

The short diameter r was determined according to the three-axis characterization method, specifically as follows: the short diameter r was determined on a plane projection diagram of the silicon-carbon composite material.

2. Battery performance

1) Initial coulombic efficiency

At 25 °C, the secondary batteries prepared in the examples and comparative examples were subjected to constant current charging at a rate of 0.33 C to a charge cut-off voltage of 4.25 V, followed by constant voltage charging to a current of ≤ 0.05 C, left to stand for 5 min, and then subjected to constant current discharging at a rate of 0.33 C to a discharge cut-off voltage of 2 V. The first charge capacity of the battery cell was divided by the discharge capacity to obtain the coulombic efficiency of the first circle of the battery.

2) Cycle capacity retention rate

At 25 °C, the secondary batteries prepared in the examples and comparative examples were subjected to constant current charging at a rate of 0.5 C to a charge cut-off voltage of 4.25 V, followed by constant voltage charging to a current of ≤ 0.05 C, left to stand for 5 min, then subjected to constant current discharging at a rate of 0.33 C to a discharge cut-off voltage of 2 V, and left to stand for 5 min, which was a charge-discharge cycle. The batteries were subjected to cyclic charge-discharge tests according to the method, and the capacity retention rates of the lithium ion batteries after 800 cycles were calculated.

III. Analysis of test results of examples and comparative examples

The secondary batteries of the examples and comparative examples were prepared according to the methods described above, and various parameters were measured. The results are shown in Table 1 below.

Table 1

| No. | Negative electrode active material | First component | EL/SSA | EL/B1 | EL/V1 | Initial coulombic efficiency | Capacity retention rate after 800 cycles |
|---|---|---|---|---|---|---|---|
| Example 1 | Three-dimensional network cross-linked structure | Tris(trimethylsilane) borate | 0.004 | 0.02 | 6 | 90% | 50% |
| Example 2 | Three-dimensional network cross-linked structure | Triphenyl borate | 0.004 | 0.02 | 6 | 89% | 51% |
| Example 3 | Three-dimensional network cross-linked structure | Triphenyl phosphate | 0.004 | 0.02 | 6 | 91% | 52% |
| Example 4 | Three-dimensional network cross-linked structure | Bis(trimethylsilyl) sulfate | 0.004 | 0.02 | 6 | 90% | 49% |
| Example 5 | Three-dimensional network cross-linked structure | Tetraallyl silicate | 0.004 | 0.02 | 6 | 89% | 48% |
| Example 6 | Three-dimensional network cross-linked structure | Triphenyl borate | 0.001 | 0.005 | 1.5 | 80% | 31% |
| Example 7 | Three-dimensional network cross-linked structure | Triphenyl borate | 0.004 | 0.02 | 6 | 84% | 35% |

(continued)

| No. | Negative electrode active material | First component | EL/SSA | EL/B1 | EL/V1 | Initial coulombic efficiency | Capacity retention rate after 800 cycles |
|---|---|---|---|---|---|---|---|
| Example 8 | Three-dimensional network cross-linked structure | Triphenyl borate | 0.01 | 0.05 | 15 | 83% | 38% |
| Example 9 | Three-dimensional network cross-linked structure | Triphenyl borate | 0.02 | 0.1 | 30 | 81% | 32% |
| Example 10 | Three-dimensional network cross-linked structure | Triphenyl borate | 0.004 | 0.001 | 6 | 86% | 45% |
| Example 11 | Three-dimensional network cross-linked structure | Triphenyl borate | 0.004 | 0.005 | 6 | 92% | 52% |
| Example 12 | Three-dimensional network cross-linked structure | Triphenyl borate | 0.004 | 0.06 | 6 | 93% | 54% |
| Example 13 | Three-dimensional network cross-linked structure | Triphenyl borate | 0.004 | 0.1 | 6 | 87% | 46% |
| Example 14 | Three-dimensional network cross-linked structure | Triphenyl borate | 0.004 | 0.02 | 1 | 87% | 46% |
| Example 15 | Three-dimensional network cross-linked structure | Triphenyl borate | 0.004 | 0.02 | 2 | 94% | 55% |
| Example 16 | Three-dimensional network cross-linked structure | Triphenyl borate | 0.004 | 0.02 | 15 | 93% | 54% |

(continued)

| No. | Negative electrode active material | First component | EL/SSA | EL/B1 | EL/V1 | Initial coulombic efficiency | Capacity retention rate after 800 cycles |
|---|---|---|---|---|---|---|---|
| Example 17 | Three-dimensional network cross-linked structure | Triphenyl borate | 0.004 | 0.02 | 30 | 87% | 46% |
| Comparative Example 1 | Three-dimensional network cross-linked structure | / | / | / | / | 75% | 20% |
| Comparative Example 2 | Honeycomb-like pore structure | Tris(trimethylsilane) borate | 0.004 | 0.02 | 6 | 70% | 12% |
| Comparative Example 3 | Honeycomb-like pore structure | Triphenyl borate | 0.004 | 0.02 | 6 | 71% | 11% |
| Comparative Example 4 | Honeycomb-like pore structure | Triphenyl phosphate | 0.004 | 0.02 | 6 | 71% | 12% |
| Comparative Example 5 | Honeycomb-like pore structure | Bis(trimethylsilyl) sulfate | 0.004 | 0.02 | 6 | 72% | 11% |
| Comparative Example 6 | Honeycomb-like pore structure | Tetraallyl silicate | 0.004 | 0.02 | 6 | 71% | 10% |

As can be seen from the results of Table 1, the negative electrode active materials of the batteries of Examples 1-17 are silicon-carbon composite materials having a three-dimensional network cross-linked pore structure, and the electrolytes contain the compound represented by formula I or formula II. The batteries of Examples 1-17 exhibit higher initial coulombic efficiency and higher cycle capacity retention rate than the battery of Comparative Example 1 in which the negative electrode active material is a silicon-carbon composite material having a honeycomb-like pore structure and the electrolyte does not contain the compound represented by formula I or formula II, and the batteries of Comparative Examples 2-6 in which the negative electrode active materials are silicon-carbon composite materials having a honeycomb-like pore structure and the electrolytes contain the compound represented by formula I or formula II.

In the comparative examples, the negative electrode is made of the silicon-carbon composite material having a honeycomb-like pore structure, and silicon particles are not easy to deposit in the honeycomb-like pore structure. Therefore, the silicon-based particles in the silicon-carbon composite material having the honeycomb-like pore structure have a low mass content of only 7%, the silicon element is concentratedly distributed on the surface of the composite material, and the carbon matrix is difficult to play a role in limiting the expansion of the silicon-based particles, resulting in poor cycle performance of the batteries.

From the comparison of Examples 7 and 8 with Examples 6 and 9, it can be seen that by controlling the ratio EL:SSA of the mass proportion EL of the first component in the electrolyte to the specific surface area SSA of the silicon-carbon composite material within the range of 0.0004-0.01, it is conducive to further improving the initial coulombic efficiency and the cycle capacity retention rate of the battery.

As can be seen from Examples 10-13, by further controlling EL:B1 within the range of 0.005-0.06, the initial coulombic efficiency and the cycle capacity retention rate of the battery can be further improved.

As can be seen from Examples 14-17, by further controlling EL:V1 within the range of 1-30 $cm^3/g$, the initial coulombic efficiency and the cycle capacity retention rate of the battery can be further improved.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

## Claims

1. A secondary battery, comprising:

   a negative electrode plate comprising a silicon-carbon composite material having a three-dimensional network cross-linked pore structure; and
   an electrolyte comprising a first component, the first component comprising at least one of compounds represented by formula I and formula II,

   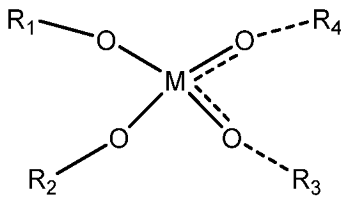 formula I 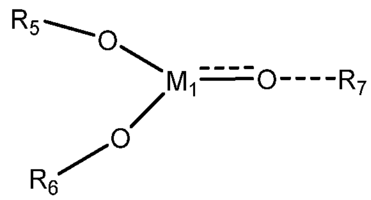 formula II

   wherein

   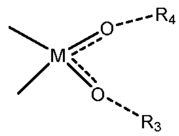

   represents that M and O can optionally be single or double bonded, and when M and O are double bonded, there is no bond between O and $R_4$ or $R_3$;

   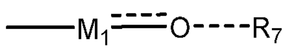

   represents that $M_1$ and O can optionally be single or double bonded, and when $M_1$ and O are double bonded, there is no bond between O and $R_7$; $R_1$, $R_2$, $R_3$, $R_4$, $R_5$, $R_6$, and $R_7$ are each independently selected from fluorine, fluorine-substituted or unsubstituted $C_1$-$C_{10}$ alkyl, aryl, carbonyl, carboxyl, an ester group, cyano, a silane group, or an ether group, and M and $M_1$ each independently comprise P, S, Si, or B.

2. The secondary battery according to claim 1, wherein

   a specific surface area of the silicon-carbon composite material is SSA $m^2/g$,
   a mass proportion of the first component based on the total mass of the electrolyte is EL g/g, and
   EL:SSA is 0.001-0.02, and optionally 0.004-0.01.

3. The secondary battery according to claim 1 or 2, wherein

   a mass proportion of the first component based on the total mass of the electrolyte is EL g/g,
   in the outer peripheral region of the silicon-carbon composite material, a mass percentage content of the silicon element in the silicon-carbon composite material relative to the total mass of the silicon-carbon composite material is B1, wherein the outer peripheral region of the silicon-carbon composite material is a region which extends from the outer surface of the silicon-carbon composite material to the interior of the silicon-carbon composite material by a distance within r/2, wherein r represents a short diameter of the silicon-carbon composite material, and

EL:B1 is 0.001-0.1, and optionally 0.005-0.06.

4. The secondary battery according to any one of claims 1 to 3, wherein a total pore volume of pores with a pore size greater than 100 nm in the silicon-carbon composite material is V1 $cm^3/g$, a mass proportion of the first component based on the total mass of the electrolyte is EL g/g, and
EL:V1 is 1-30, and preferably 2-15.

5. The secondary battery according to any one of claims 1 to 4, wherein the compound represented by formula I is selected from one or more of the following compounds:

trimethyl phosphate, triphenyl phosphate, tris(trimethylsilyl) phosphorus, tributyl phosphate, diethyl sulfate, bis(trimethylsilyl) sulfate, ethyl silicate, tetrapropoxysilane, tetraphenyl silicate, tetraallyl silicate, and tetraethyl orthosilicate;
the compound represented by formula II is selected from one or more of the following compounds:
diisopropyl sulfite, tris(trimethylsilane) borate, triethyl borate, triphenyl borate, and triisopropyl borate.

6. The secondary battery according to any one of claims 3 to 5, wherein in the outer peripheral region of the silicon-carbon composite, a mass percentage content A1 of the carbon element of the silicon-carbon composite material relative to the total mass of the silicon-carbon composite and the mass percentage content B1 of the silicon element of the silicon-carbon composite material relative to the total mass of the silicon-carbon composite material satisfy $0.8 \leq B1/A1 \leq 2.5$, and optionally $1 \leq B1/A1 \leq 1.5$.

7. The secondary battery according to any one of claims 1 to 6, wherein the mass percentage content A of the carbon element of the silicon-carbon composite material relative to the total mass of the silicon-carbon composite material has a decreasing trend in a direction from the geometric center of the silicon-carbon composite material to the outer surface of the silicon-carbon composite material, while the mass percentage content B of the silicon element of the silicon-carbon composite material relative to the total mass of the silicon-carbon composite material has an increasing trend in a direction from the geometric center of the silicon-carbon composite material to the outer surface of the silicon-carbon composite material.

8. The secondary battery according to any one of claims 1 to 7, wherein
the specific surface area SSA of the silicon-carbon composite material satisfies: $2\ m^2/g \leq SSA \leq 10\ m^2/g$; optionally, $3\ m^2/g \leq SSA \leq 7\ m^2/g$.

9. The secondary battery according to any one of claims 1 to 8, wherein the silicon-carbon composite material comprises: carbon matrix particles comprising a three-dimensional network cross-linked pore structure; and silicon nanoparticles, at least a part of the silicon nanoparticles being disposed in the three-dimensional network cross-linked pore structure.

10. The secondary battery according to claim 9, wherein the silicon nanoparticles comprise one or more of silicon-oxygen compounds, amorphous silicon, crystalline silicon, and silicon-carbon composites, and optionally amorphous silicon.

11. The secondary battery according to claim 9 or 10, wherein the carbon matrix comprises one or more of graphite, soft carbon, and hard carbon.

12. The secondary battery according to any one of claims 9 to 11, wherein a mass proportion of the silicon nanoparticles in the silicon-carbon composite material is greater than or equal to 40%, and optionally 40%-60%.

13. The secondary battery according to any one of claims 1 to 12, wherein a ratio of a powder compaction density P11 $g/cm^3$ of the silicon-carbon composite material tested after 1 powder compaction under an action force of 20,000 N to a compaction density P21 $g/cm^3$ of the silicon-carbon composite material tested after 20 powder compactions under an action force of 20,000 N satisfies: $1.00 \leq P21/P11 \leq 1.20$, and optionally $1.02 \leq P21/P11 \leq 1.10$.

14. The secondary battery according to any one of claims 1 to 13, wherein the powder compaction density P11 $g/cm^3$ of the silicon-carbon composite material tested after 1 powder compaction under an action force of 20,000 N satisfies: $1.10 < P11 \leq 1.40$, and optionally $1.12 \leq P11 \leq 1.35$.

15. The secondary battery according to any one of claims 1 to 14, wherein the secondary battery comprises at least one of

a lithium ion battery, a sodium ion battery, a magnesium ion battery, and a potassium ion battery.

**16.** An electric device, comprising the secondary battery according to any one of claims 1 to 15.

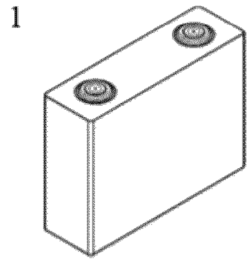


FIG. 1

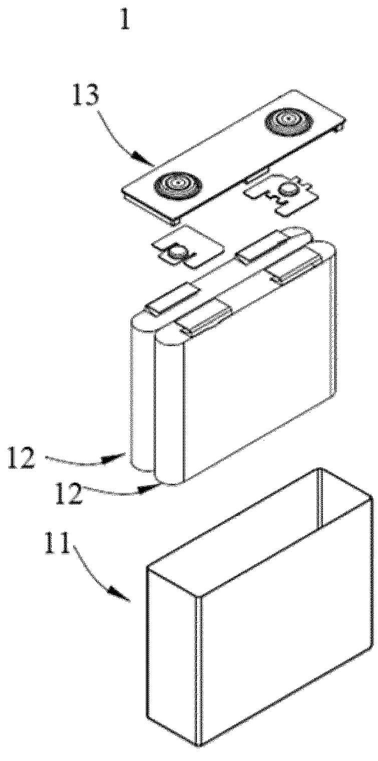


FIG. 2

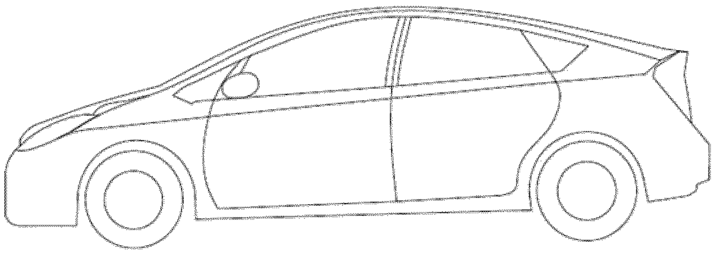

FIG. 3

**INTERNATIONAL SEARCH REPORT**

International application No. **PCT/CN2023/085554**

**A. CLASSIFICATION OF SUBJECT MATTER**

H01M10/0525(2010.01)i; H01M4/36(2006.01)i; H01M10/0567(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; DWPI; ENTXT; CNKI; WEB OF SCIENCE; STN: 电池, 负极, 电解液, 硅, 碳, 三维, 网络, 磷酸酯, 硼酸酯, 硅酸酯, 硫酸酯, battery, negative electrode, electrolyte, silicon, carbon, three dimensions, network, phosphate, borate, silicate, sulfate

**C. DOCUMENTS CONSIDERED TO BE RELEVANT**

| Category* | Citation of document, with indication, where appropriate, of the relevant passages | Relevant to claim No. |
|---|---|---|
| X | CN 114420998 A (DONGGUAN AMPEREX TECHNOLOGY LTD.) 29 April 2022 (2022-04-29)<br>description, paragraphs 18-52 | 1-16 |
| X | CN 115312697 A (JIANGSU ZENERGY BATTERY TECHNOLOGIES CO., LTD.) 08 November 2022 (2022-11-08)<br>description, paragraphs 47-71 | 1-16 |
| X | CN 113161615 A (HUZHOU KUNLUN ENCHEM POWER BATTERY MATERIAL CO., LTD.) 23 July 2021 (2021-07-23)<br>description, paragraphs 2 and 8-41 | 1-16 |
| X | CN 111834671 A (XIANGHE KUNLUN CHEMICALS CO., LTD.) 27 October 2020 (2020-10-27)<br>description, paragraphs 6-54 | 1-16 |
| A | JP 2019145212 A (KURARAY CO., LTD. et al.) 29 August 2019 (2019-08-29)<br>entire document | 1-16 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 December 2023** | **21 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/085554**

| Patent document cited in search report | Publication date (day/month/year) | Patent family member(s) | Publication date (day/month/year) |
|---|---|---|---|
| CN 114420998 A | 29 April 2022 | WO 2023124315 A1 | 06 July 2023 |
| CN 115312697 A | 08 November 2022 | None | |
| CN 113161615 A | 23 July 2021 | CN 113161615 B | 25 April 2023 |
| CN 111834671 A | 27 October 2020 | None | |
| JP 2019145212 A | 29 August 2019 | None | |

Form PCT/ISA/210 (patent family annex) (July 2022)